# EUROPÄISCHE PATENTSCHRIFT

(11) **EP 4 311 969 B1**
(45) Veröffentlichungstag und Bekanntmachung des Hinweises auf die Patenterteilung: **15.04.2026**
(21) Anmeldenummer: 23187586.5
(22) Anmeldetag: 25.07.2023
(51) Int. Cl.: F16L 37/088

(54) **STECKVERBINDER ZUM VERBINDEN VON LEITUNGEN FÜR FLÜSSIGE ODER GASFÖRMIGE MEDIEN**
PLUG-IN CONNECTOR FOR CONNECTING CONDUITS FOR LIQUID OR GASEOUS MEDIA
CONNECTEUR ENFICHABLE POUR LA CONNEXION DE CONDUITES POUR MILIEUX LIQUIDES OU GAZEUX

(30) Priorität: 26.07.2022 AT 505662022
(43) Veröffentlichungstag der Anmeldung: 31.01.2024
(73) Patentinhaber: Henn GmbH & Co KG., 6850 Dornbirn (AT)
(72) Erfinder: ROHNER, Manuel, 6841 Mäder (AT)
(74) Vertreter: Burger, Hannes

(56) Entgegenhaltungen:
- AT-U1- 17 372
- DE-A1- 102005 050 490
- US-A1- 2018 283 589

## Beschreibung

Die Erfindung betrifft einen rohrförmigen Stutzen für eine Steckverbindung an Rohren und Schläuchen, zur Verbindung mit einem rohrförmigen Stecker, sowie eine Steckverbindung an Rohren und Schläuchen unter Verwendung dieses Stutzens.

Die DE 102005050490 A1 offenbart einen gattungsgemässen Stutzen, der mit einem seiner Enden mit einem Rohr und/oder einem Schlauch verbindbar oder daran ausgebildet ist, und der mit seinem anderen Ende abdichtend mit einem rohrförmigen Stecker, der ebenfalls mit einem Rohr und/oder einem Schlauch verbunden ist, ineinander steckbar und axial sichernd verrastbar ist. Dazu weist der Stutzen mindestens eine teilweise am Aussenumfang umlaufende Rastschulter oder Rastkante auf, die aus einer vom steckerseitigen Aussenumfang ansteigenden Schräge und einer sich bezüglich des steckerseitigen Aussenumfangs dahinter anschliessenden Rastfläche gebildet ist. Die Rastfläche ist dabei vorzugsweise radial zur Längsachse des Stutzens ausgerichtet. Eine spezielle Ausführungsform sieht weiters einen auf Stutzen aufgeschobenen dünnwandigen Ring vor, an welchem eine die Rastschulter oder Rastkante oder Rastfedernut radial überragenden Lasche vorhanden, die aus dem Material des aufgeschobenen Ringes herausgearbeitet ist. Weiters ist im aufgeschobenen Ring eine Rastfedernut ausgearbeitetIn der AT 17372 U1 ist eine Anordnung zum Verbinden von Bauteilen für flüssige oder gasförmige Medien offenbart, wobei ein Verbinderkörper mit einem Einsteckabschnitt zum Einstecken in eine Aufnahmeöffnung eines Steckverbinders dient. Dieser Verbinderkörper ist mit einer Rastschulter bzw. Rastkante als Rastabschnitt für eine Rastfeder bzw. einen Sicherungsbügel versehen und als Blechumformteil ausgebildet, beispielsweise als Tiefziehteil. Axial benachbart mit und/oder überlappend mit einer Rastschulter oder Rastkante oder Rastfedernut ist eine Verdrehsicherung in Form von zumindest einer die Rastschulter oder Rastkante oder Rastfedernut radial überragenden Lasche vorhanden.

Auch in der US 2017/363237 A1 ist ein derartiger Verbinderkörper offenbart, der einstückig und als monolithische Struktur mit einem umlaufenden Wulst bzw. einer Aufstülpung ausgebildet ist, welche Strukturen als Rastabschnitte für eine Rastfeder bzw. einen Sicherungsbügel dienen.

Die US2018/283589A1 offenbart eine Fluidikanordnung mit einem Schlauch und einem mit einem Sicherungsring ausgestatteten Stecker. Dieser Stecker ist für die Verbindung mit einer Buchse vorgesehen und bildet so ein Schnellkupplungssystem. Der Stecker verfügt über Orientierungsnasen und eine Verriegelungsaussparung, die mit einem komplementären Element an der Buchse zusammenwirkt. Der Schlauch hat an seinem freien Ende einen vergrößerten Durchmesser, wodurch eine Dichtfläche entsteht. Der Stecker ist über Schlitze am Schlauch befestigt, die den Schlauch verformen und so eine Drehbewegung verhindern. Zusätzlich verhindert eine Anschlagrippe am Schlauch ein Verrutschen des Steckers entlang des Schlauchs.

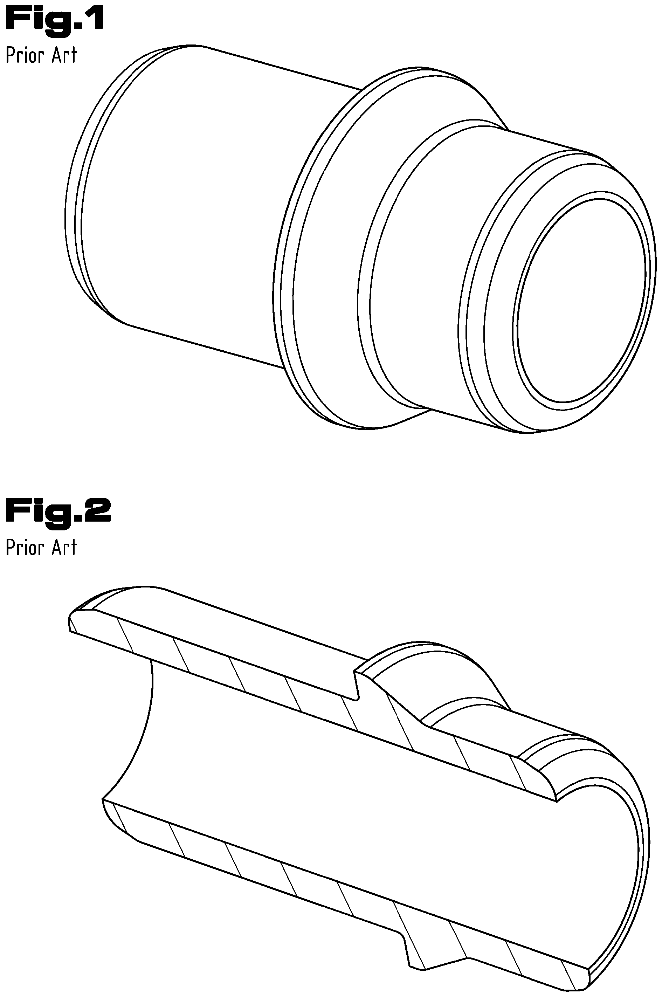

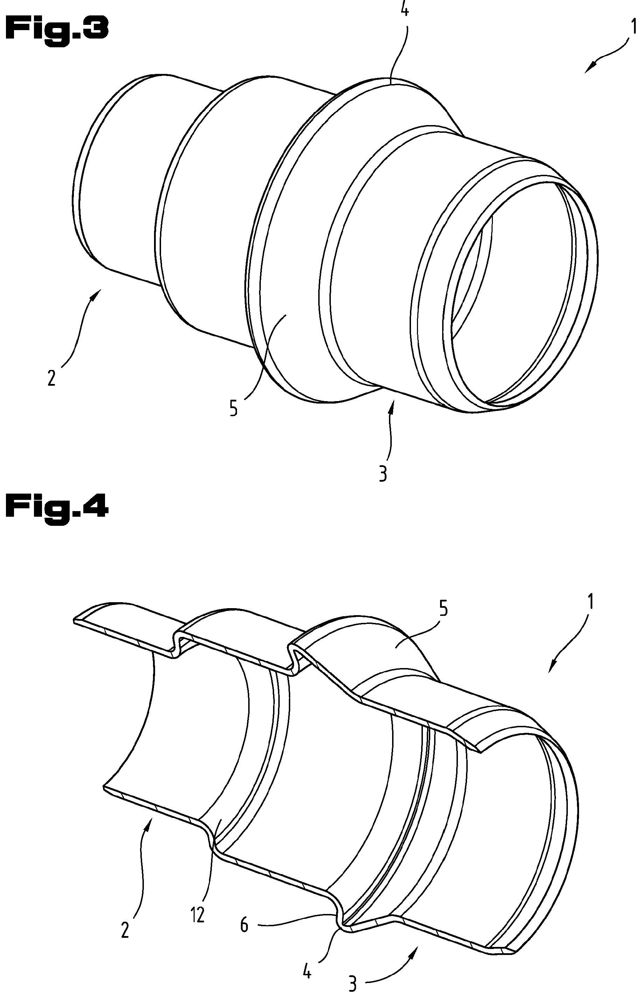

Bisherige bekannte Lösungen verwenden hierfür Dreh-Frästeile, wie sie beispielsweise in Fig. 1 und Fig. 4 dargestellt sind, und die einen deutlich höheren Materialaufwand und damit verbundene höhere Kosten und einen Gewichtsnachteil mit sich ziehen. Ferner ist der Produktionsaufwand entsprechend aufwendig und zeitintensiv.

Für bestimmte Anwendungen, insbesondere in Wärmetauschern, sollen derartige Stutzen häufig mittels eines Lötprozess befestigt werden, was die Verwendung von herkömmlichen Bauteilen mit integrierten oder zusätzlichen Kunststoffelementen verbietet. Aktuelle Anwendungen zeigen einen gehäuften Einsatz von Stutzen, welche direkt am Rohr angeformt sind, die den Nachteil aufweisen, dass sie nicht mit einer Verdrehsicherung versehen werden können.

Aufgabe der vorliegenden Erfindung war es, die Nachteile des Standes der Technik zu überwinden und eine Vorrichtung zur Verfügung zu stellen, der eine einfache Anbringung an Gehäusen, Rohren oder Schläuchen erlaubt und wenn gewünscht einfach mit einer Verdrehsicherung ausgestattet werden kann.

Diese Aufgabe wird durch eine Vorrichtung und ein System gemäß den Ansprüchen gelöst.

Die erfindungsgemäße Vorrichtung, deren Nocke an einem separat gefertigten und mit dem Stutzen fest verbundenen Verschlussring ausgebildet ist, und wobei am Verschlussring zumindest eine Ausnehmung ausgearbeitet ist, die zusammen mit der Rastfläche am Stutzen eine Rastfedernut bildet, ist erfindungsgemäss dadurch gekennzeichnet, dass jede Nocke als ringförmige Erhebung am Verschlussring ausgebildet ist. Damit ist ein Anschluss des Stutzens sowohl an Rohre und Schläuche, als auch an ein Gehäuse oder ähnliches sowohl durch einen Lötprozess als auch durch Einpressen ermöglicht. Der Stutzen ist dabei einfach und kostengünstig in der Herstellung, wobei die gleiche Flexibilität und Funktionalität bei Fertigung mit alternativen Verfahren nur mit erhöhtem Aufwand, dadurch sehr teuer, oder technologisch gar nicht realisierbar wäre. Der Begriff Gehäuse umfasst dabei alle Arten von Behältern oder Apparaten, die zum Lagern, Aufbewahren, Transportieren und dgl. von Fluiden geeignet und ausgeführt sind.

Bevorzugt ist dabei der Verschlussring auf die Rastfläche hin offen ausgeführt.

Bevorzugt ist dabei der Stutzen einstückig mit zumindest einer Rastschulter oder Rastkante und einer Rastfläche ausgeführt, welche die steckerseitige Wand der Rastfedernut bildet.

Gemäss einer bevorzugten Ausführungsform der Erfindung ist der Stutzen einschliesslich der Schräge, der Rastschulter oder Rastkante oder der Rastfedernut aus feuerverzinktem Stahlblech, Aluminium oder Edelstahl ausgeführt.

Um dabei die Möglichkeit der Befestigung des Stutzens durch beispielsweise einen Lötprozess nicht zu verlieren, ist der Verschlussring vorzugsweise aus Metall, vorzugsweise aus feuerverzinktem Stahlblech, Aluminium oder Edelstahl, ausgeführt.

Bei letzterer Ausführungsform kann eine optimale und sichere Anbringung des Verschlussringes erfindungsgemäss dadurch erzielt werden, dass dieser auf den Stutzen aufgepresst oder damit verlötet oder verschweisst wird.

Die Erfindung betrifft neben dem Stutzen selbst auch eine erfindungsgemässe Steckverbindung an Rohren und Schläuchen, die zur Verbindung eines rohrförmigen Stutzens mit einem rohrförmigen Stecker dient. Dabei sind in bekannter Weise der Stutzen und der Stecker jeweils mit ihren Enden mit einem Rohr und/oder einem Schlauch verbindbar und mit ihren anderen Enden abdichtend ineinander steckbar und axial sichernd miteinander verrastbar.

Zur Lösung der eingangs definierten Aufgabe ist eine solche Steckverbindung erfindungsgemäss gekennzeichnet durch einen Stutzen gemäss einem der vorangehenden Absätze.

Zum besseren Verständnis der Erfindung wird diese anhand der nachfolgenden Figuren näher erläutert.

Es zeigen jeweils in stark vereinfachter, schematischer Darstellung:
- Fig. 1: Einen Einpressstutzen gemäss dem Stand der Technik ohne Verdrehsicherung als Dreh-Frästeil;
- Fig. 2: Den Einpressstutzen der Fig. 1 im Längsschnitt;
- Fig. 3: Einen erfindungsgemässen Einpressstutzen ohne Verdrehsicherung als Tiefziehteil;
- Fig. 4: Den erfindungsgemässen Einpressstutzen der Fig. 3 im Längsschnitt;
- Fig. 5: Eine weitere Ausführungsform eines erfindungsgemässen Einpressstutzens ohne Verdrehsicherung als Tiefziehteil;
- Fig. 6: Den erfindungsgemässen Einpressstutzen der Fig. 5 im Längsschnitt;
- Fig. 7: Einen herkömmlichen Einpressstutzen mit Verdrehsicherung als Dreh-Frästeil;
- Fig. 8: Den Einpressstutzen bekannter Ausführung der Fig. 7 im Längsschnitt;
- Fig. 9: Einen erfindungsgemässen Einpressstutzen mit Verdrehsicherung als Tiefziehteil-Baugruppe;
- Fig. 10: Den erfindungsgemässen Einpressstutzen der Fig. 9 im Längsschnitt;
- Fig. 11: Ein Anwendungsbeispiel ohne Verdrehsicherung;
- Fig. 12: Ein Anwendungsbeispiel mit Verdrehsicherung und gleicher Kupplung wie Fig. 11;
- Fig. 13: Ein weiteres Anwendungsbeispiel ohne Verdrehsicherung mit einer anderen Kupplung;
- Fig. 14: Ein weiteres Anwendungsbeispiel mit Verdrehsicherung und Kupplung wie Fig. 13;

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

In der Fig. 1 ist in einer Ansicht von schräg vorne ein Stutzen in herkömmlicher Bauart, d.h. als Dreh-Fräs-Teil, dargestellt. Die Formgebung entspricht der gemäss den Vorgaben des VDA (Verbandes der Automobilindustrie) geforderten Ausführung. Fig. 2 zeigt einen Längsschnitt durch den Stutzen gemäss dem Stand der Technik in der gleichen Orientierung wie Fig. 1.

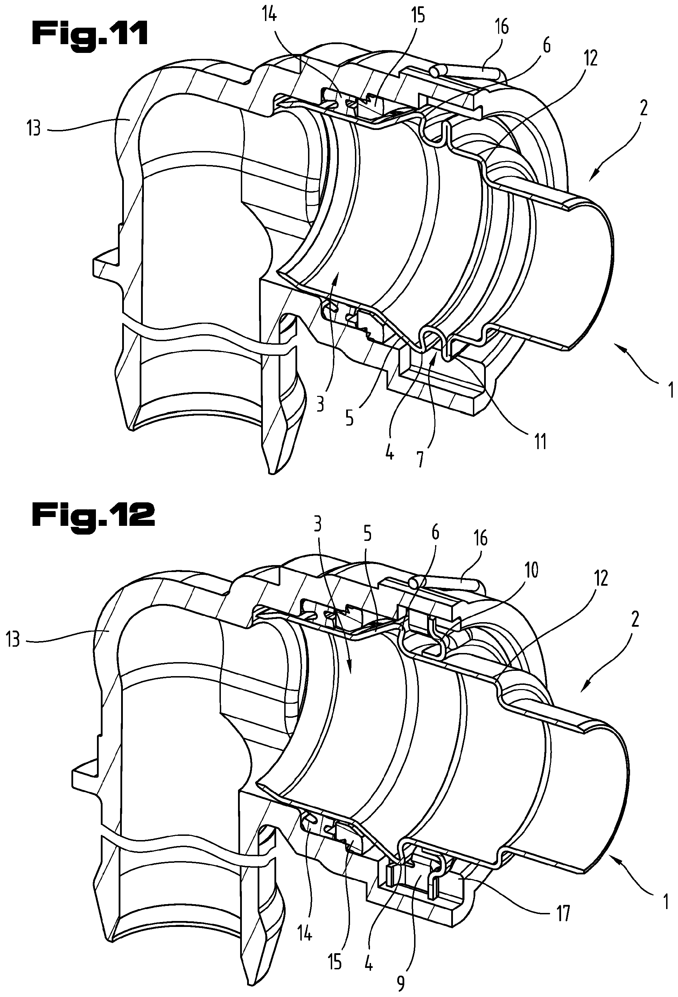

Erfindungsgemäss handelt es sich bei dem neu vorgeschlagenen Stutzen 1, wie in einer beispielhaften Ausführungsform in Fig. 3 in einer Ansicht entsprechend Fig. 1 dargestellt, nun um ein Tiefziehteil, das sich aber ebenfalls an der Geometrie des VDA-Stutzens orientiert. Der dargestellte rohrförmige Stutzen 1, der zur Verbindung mit einem rohrförmigen Stecker 13 bzw. 18 (siehe Fig. 11 bis Fig. 14) gestaltet ist, um an Rohren, Schläuchen oder Gehäusen eine steckbare, axial sichernd verrastbare und beschädigungsfrei lösbare Steckverbindung zu bilden, ist mit einem ersten Ende 2 mit einem Rohr und/oder einem Schlauch und/oder einem Gehäuse verbindbar. Dabei ist am äussersten Rand des Endes 2 vorzugsweise eine konische Einführfase ausgebildet, an welche sich ein Einpress- oder Lötbereich anschliesst.

Mit dem gegenüberliegenden zweiten Ende 3 kann der Stutzen 1 abdichtend in den rohrförmigen Stecker 13, 18 eingeführt und dort verrastet werden. Auch das zweite Ende 3 weist vorzugsweise eine konische Einführfase auf, der sich zur Mitte des Stutzens 1 ein Dichtbereich anschliesst.

Dazu weist der Stutzen 1 mindestens eine am Aussenumfang zumindest teilweise umlaufende Rastschulter oder eine Rastkante 4 auf. Diese Rastkante 4 ist am rohr- oder schlauchseitigen Ende einer vom steckerseitigen Aussenumfang ansteigenden Schräge 5 ausgebildet und geht in eine sich bezüglich des steckerseitigen Aussenumfangs dahinter anschliessenden Rastfläche 6 über, die im Wesentlichen quer zur Längsachse des Stutzens 1 orientiert ist. Dieser Stutzen 1 ist eine Version ohne Verdrehsicherung und ohne klassische Rastfedernut bzw. Rastfederschlitze. Vielmehr dienen hier die Rastkante 4 und die Rastfläche 6 als Auflagefläche für zumindest eine Rastfeder 16 am Stecker 13 bzw. 18, durch welche die Steckverbindung in axialer Richtung zusammengehalten wird, sobald der Stutzen 1 in den Stecker 13, 18 vollständig eingesteckt ist, die Rastfeder 16 dabei über die Rastkante 4 unter elastischer Verformung übergeschoben wurde, dahinter auf die Mittelachse des Stutzens 1 zurückfedert und so ein Zurückziehen des Stutzens 1 verhindert. Diese Funktionalität, die in gleichartiger Weise bei allen erfindungsgemässen Ausführungsformen realisiert ist, ist bei den gattungsgemässen Kupplungen wohl bekannt.

Alle Teile des Stutzens 1, einschliesslich der zumindest einen Rastschulter oder Rastkante 4 und vorzugsweise der Schräge 5, sind einstückig als Tiefziehteil aus Metall ausgeführt.

Wie insbesondere im Längsschnitt der Fig. 4 durch den oben beschriebenen Stutzen 1 erkennbar ist, setzt sich das erste Ende 2 aus zwei aneinander direkt anschliessenden Abschnitten mit unterschiedlichem Durchmesser zusammen, wobei vorzugsweise der Abschnitt mit grösserem Durchmesser näher an der Rastschulter bzw. Rastkante 4 liegt. Die Schulter 12, die den Übergang zwischen den Abschnitten mit unterschiedlichem Durchmesser bildet, bildet die Angriffsfläche für ein Werkzeug zum Einpressen des Stutzens 1 in ein Gehäuse oder in ein Rohr aus.

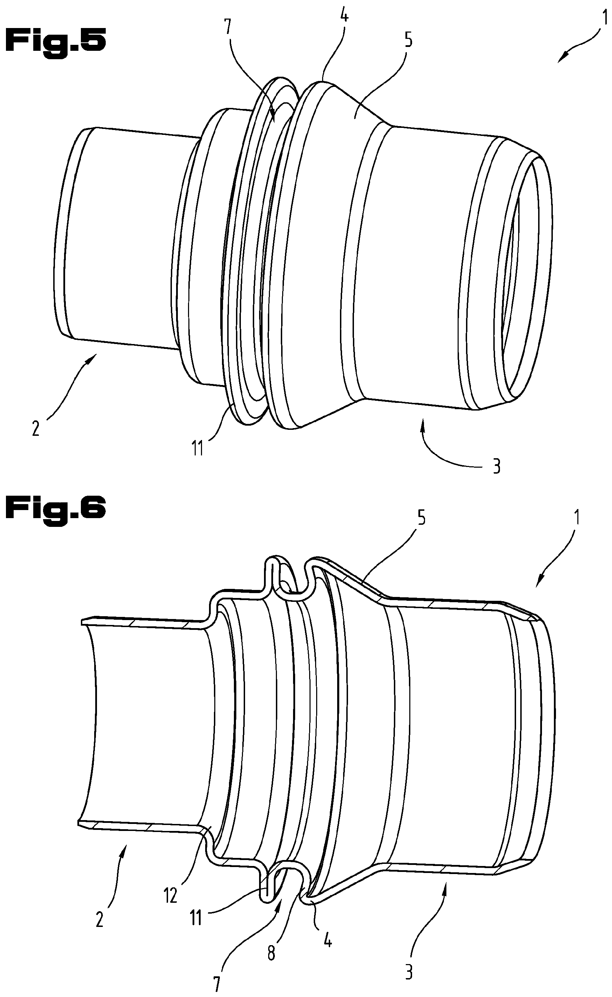

Eine weitere erfindungsgemässe Ausführungsform eines Stutzens 1 ist in den Fig. 5 und 6 dargestellt. Zur Verrastung mit einem rohrförmigen Stecker weist der Stutzen 1 eine Rastfedernut 7 auf, die einstückig mit dem gesamten Stutzen 1 ausgeführt ist, und wobei die gesamte Anordnung als Tiefziehteil aus Metall ausgeführt ist. Bevorzugt sind hier wieder feuerverzinktes Stahlblech, Aluminium oder Edelstahl. Die Rastschulter bzw. Rastkante 4 ist wieder anschliessend an eine Schräge 5 ausgebildet, in gleicher Weise wie für die Ausführungsform der Fig. 3 und 4, und bildet den oberen Rand der steckerseitigen Wand 8 der Rastfedernut 7, wie im Längsschnitt der Fig. 6 gut zu erkennen ist. Die Wand 8 entspricht hier der Rastfläche 6 der zuvor beschriebenen Ausführungsform des Stutzens 1. Die Rastfedernut 7 begrenzt die axiale Position einer Rastfeder 16 am Stecker 13 bzw. 18 in beiden Richtungen.

Die der steckerseitigen Wand 8 der Rastfedernut 7 entgegengesetzt angeordnete Begrenzung der Rastfedernut 7 ist durch einen einstückig mit dem Stutzen 1 ausgeführten Rastring 11 gebildet. Damit entfällt die Notwendigkeit eines separaten Rastringes, der in einem zusätzlichen Herstellungsschritt mit dem Stutzen 1 verbunden werden müsste.

Auch der Stutzen 1 gemäss den Fig. 5 und 6 weist bevorzugt ein erstes Ende 2 auf, das aus zwei aneinander direkt anschliessenden Abschnitten mit unterschiedlichem Durchmesser besteht, wobei vorzugsweise der Abschnitt mit grösserem Durchmesser näher an der Rastfedernut 7 liegt.

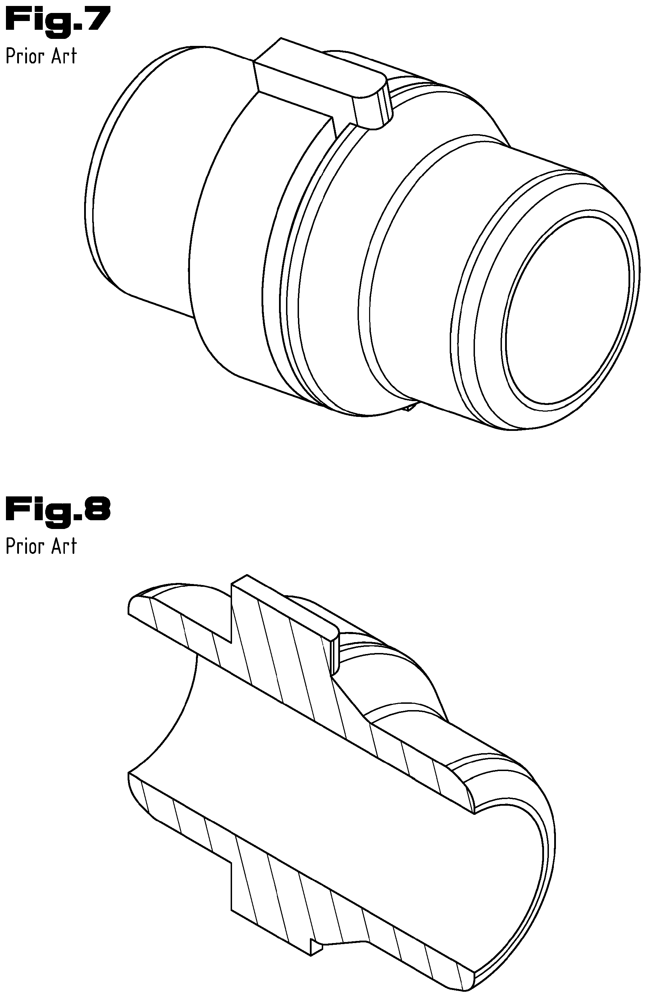

Eine herkömmliche Konstruktion eines Stutzens 1 mit integrierter Verdrehsicherung durch radial wegragende Nocken oder Erhebungen ist in den Fig. 7 in einer Ansicht von schräg vorne und in Fig. 8 im Längsschnitt in gleicher Orientierung dargestellt. Auch diese bekannte Ausführungsform ist ein in der Herstellung aufwendiger Dreh-Fräs-Teil.

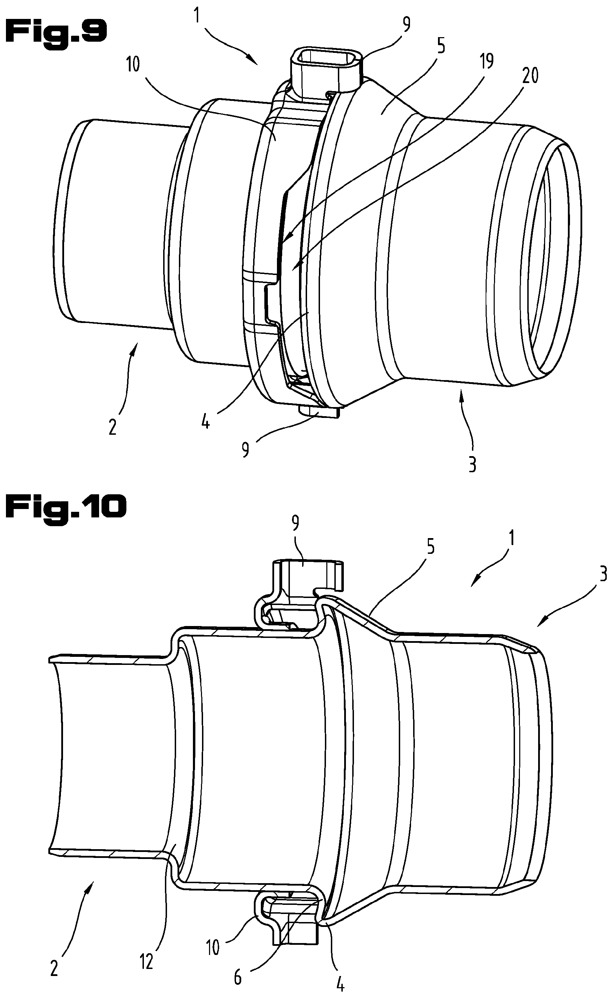

Ein erfindungsgemässer Stutzen 1 als Tiefziehteil, vorzugsweise aus feuerverzinktem Stahlblech, Aluminium oder Edelstahl, und mit einer Verdrehsicherung ist in schräger Seitenansicht in Fig. 9 dargestellt. Axial benachbart mit und/oder überlappend mit einer Rastschulter oder Rastkante 4 oder auch einer allfälligen Rastfedernut 7 bei anderen Ausführungsformen des Stutzens 1 ist als Verdrehsicherung zumindest eine die Rastschulter oder Rastkante 4 oder Rastfedernut 7 radial zumindest teilweise überragende Nocke 9 vorhanden. Vorzugsweise sind zwei Nocken 9 einander diametral gegenüberliegend angeordnet. In einer Ausführungsform, die nicht unter den Wortlaut der Ansprüche fällt, kann die Nocke 9 beispielsweise aus dem Material des Stutzens 1 durch Kaltverformen, z.B. Bördeln oder Herausdrücken von Lappen, hergestellt sein.

In Fig. 9 ist eine erfindungsgemäße Ausführungsform dargestellt, gemäss welcher die zumindest eine Nocke 9 an einem separat gefertigten und mit dem Stutzen 1 fest verbundenen Verschlussring 10 ausgebildet ist. Dieser Verschlussring 10 ist vorzugsweise aus Metall, vorzugsweise aus feuerverzinktem Stahlblech, Aluminium oder Edelstahl, ausgeführt und vorteilhafterweise auf den Stutzen 1 aufgepresst oder damit verlötet oder verschweisst.

Wie der Längsschnitt der Fig 10 zeigt, sind die Nocken 9 als ringförmige Erhebungen am Verschlussring 10 ausgebildet. Der Verschlussring 10 selbst ist auf die Rastfläche 6 hin offen. Der Verschlussring 10 kann vorteilhafterweise auch eine mögliche Kippung der Kupplung auf dem Stutzen 1 reduzieren oder gänzlich verhindern.

Vorzugsweise an zwei einander gegenüberliegenden Stellen entlang des Umfangs des Verschlussringes 10 sind an dessen äusserem vorderen Rand Ausnehmungen 19 ausgearbeitet, die sich über einen Teil des Umfangs des Verschlussrings 10 erstrecken. Diese Ausnehmungen 19 des Verschlussrings 10 bilden mit dem axial gegenüberliegenden umfangsmässigen Abschnitt der Rastfläche 6 des Stutzens 1 eine Rastfedernut 20, ähnlich einer allein am Stutzen 1 ausgebildeten Rastfedernut 7 wie in Fig. 5 oder 6 dargestellt. Auch die Rastfedernut 20 begrenzt die axiale Position einer Rastfeder 16 am Stecker 13 bzw. 18 in beiden Richtungen. Die Erfindung betrifft neben dem Stutzen selbst auch eine erfindungsgemässe Steckverbindung an Rohren und Schläuchen, die zur Verbindung eines erfindungsgemässen rohrförmigen Stutzens 1 wie beispielhaft in den Fig. 3 bis 6, 9 und 10 dargestellt und oben beschrieben, mit einem rohrförmigen Stecker dient. In bekannter Weise können der Stutzen 1 und der komplementäre Stecker jeweils mit ihren Enden mit einem Gehäuse, einem Rohr und/oder einem Schlauch verbunden werden oder sind daran ausgebildet. Mit ihren anderen Enden sind des Stutzen 1 und der Stecker abdichtend ineinander steckbar und axial sichernd miteinander verrastbar, vorzugsweise mittels zumindest einer über zumindest einen Teil des Umfangs des Stutzens 1 die Rastschulter oder Rastkante 4 hintergreifenden oder in die Rastfedernut 7 eingreifenden Rastfeder 16.

Die Fig. 11 zeigt eine Stecker 13/Stutzen 1 - Verbindung in gestecktem Zustand. Ein rohrförmiger Stutzen 1 entsprechend der Ausführungsform der Fig. 5 und Fig. 6 ist in einen rohrförmigen Stecker 13 eingesteckt, der beispielhaft in Form einer 90gradigen Schlauchtülle ausgebildet ist. Zur fluiddichten Abdichtung der Steckverbindung ist zumindest ein Dichtelement 14, beispielsweise eine Lippendichtung oder ein O-Ring eingesetzt. Ein Sicherungsring 15 schliesst die Dichtringnut. Eine Rastfeder 16, die in entsprechenden Haltestrukturen des Steckers 13 gehalten ist, liegt bei zur Gänze eingeschobenem Stutzen 1 hinter der Rastkante 4 zumindest über einen Teil des Umfangs des Stutzens 1 innerhalb der Rastfedernut 7 und sichert so die Verbindung zwischen Stecker 13 und Stutzen 1 in axialer Richtung.

Eine Steckverbindung eines tüllenförmigen Steckers 13 wie in Fig. 11 mit einem Stutzen 1 mit Verdrehsicherung entsprechend einer Ausführungsform nach den Fig. 9 und Fig. 10 ist in Fig. 12 dargestellt. Die Fluiddichtheit wird wieder über zumindest ein Dichtelement 14 und wenn nötig einen Sicherungsring 15 gewährleistet, und eine Rastfeder 16 sichert die Steckverbindung in axialer Richtung durch zumindest teilweises Hintergreifen der Rastkante 4 am Stutzen 1.

Wie bereits im Zusammenhang mit Fig. 9 und Fig. 10 erläutert wurde, ist eine Verschlussring 10 mit dem Stutzen 1 verbunden. Ein Teilbereich des Umfangs des Verschlussrings 10 kann auf seiner auf die Rastkante 4 zugewandten Seite mit der Rastfläche 6 zusammen eine Aufnahmenut bilden, die von der Funktion her der Rastfedernut 7 entspricht.

Am Verschlussring 10 ausgebildete Nocken 9 kommen bei in Umfangsrichtung korrekt positioniertem Stutzen 1 in Ausnehmungen 17 am inneren Randbereich des Steckers 13 zu liegen und sorgen derart für eine in Umfangsrichtung genau vorgegeben Ausrichtung von Stecker 13 und Stutzen 1 zueinander.

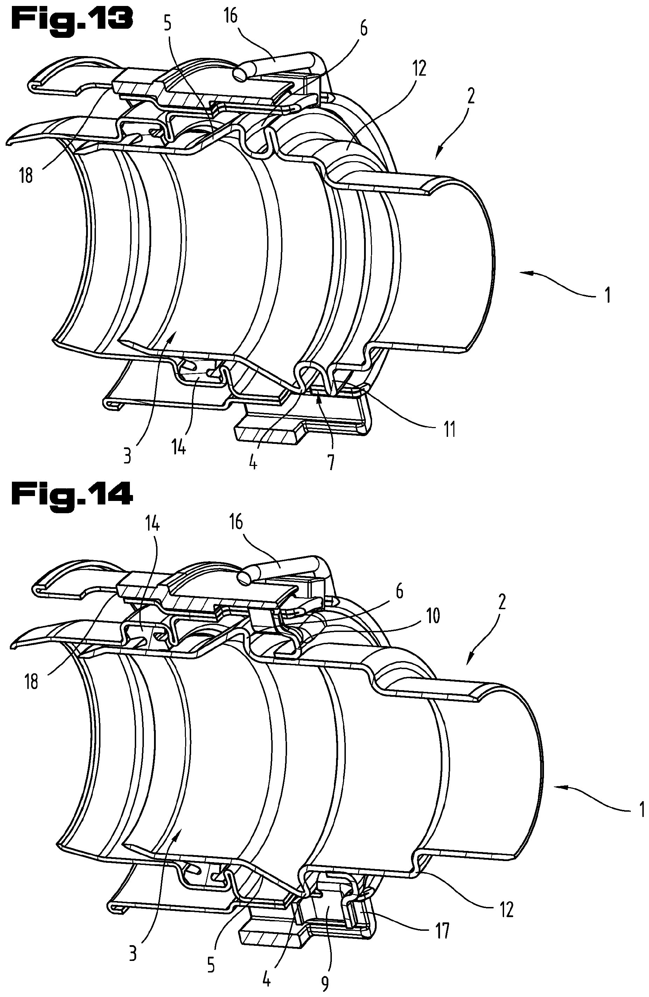

Fig. 13 zeigt eine Steckverbindung eines Stutzens 1 in einer Ausführungsform gemäss den Fig. 5 und Fig. 6 mit einer anders als in Fig. 11 und Fig. 12 ausgeführten, weiteren Ausführungsform eines Steckers 18. Diese Steckerform kommt beispielsweise für Kühlwasser-Schlauchanschlüsse in der Automobilindustrie zum Einsatz.

Wie Fig. 14 zeigt, kann auch eine derartige Steckverbindung eines Steckers 18 mit einem Stutzen 1 beispielsweise in einer Gestaltung gemäss den Fig. 9 und Fig. 10 mit einer Verdrehsicherung ausgestattet sein, die beispielsweise wieder durch Aufnahme zumindest einer Nocke 9 an einem Verschlussring 10 in eine Aufnahme 17 am Stecker 18 gebildet ist.

### Bezugszeichenaufstellung

- 1: Stutzen
- 2: Erstes Ende
- 3: Zweites Ende
- 4: Rastkante
- 5: Schräge
- 6: Rastfläche
- 7: Rastfedernut
- 8: Wand der Rastfedernut
- 9: Nocke
- 10: Verschlussring
- 11: Rastring
- 12: Schulter
- 13: Stecker
- 14: Lippendichtung
- 15: Sicherungsring
- 16: Rastfeder
- 17: Ausnehmung
- 18: Stecker
- 19: Ausschnitt
- 20: Rastfedernut

## Patentansprüche

1. Rohrförmiger Stutzen (1) für eine Steckverbindung an Rohren und Schläuchen, zur Verbindung mit einem rohrförmigen Stecker (13, 18), wobei der Stutzen (1) mit einem Ende (2) mit einem Rohr und/oder einem Schlauch und/oder einem Gehäuse verbindbar und mit dem anderen Ende (3) abdichtend mit dem rohrförmigen Stecker (13, 18) ineinander steckbar und axial sichernd verrastbar ist, wobei der Stutzen (1) mindestens eine am Aussenumfang zumindest teilweise umlaufende Rastschulter oder Rastkante (4) aufweist, die aus einer vom steckerseitigen Aussenumfang ansteigenden Schräge (5) und einer sich bezüglich des steckerseitigen Aussenumfangs dahinter anschliessenden Rastfläche (6) gebildet ist, wobei der Stutzen (1) einschliesslich der zumindest einen Rastschulter oder Rastkante (4) einstückig als Tiefziehteil aus Metall ausgeführt ist, wobei axial benachbart mit und/oder überlappend mit einer Rastschulter oder Rastkante (4) oder Rastfedernut (7) eine Verdrehsicherung in Form von zumindest einer die Rastschulter oder Rastkante (4) oder Rastfedernut (7) radial überragenden Nocke (9) vorhanden ist, wobei die Nocke (9) an einem separat gefertigten und mit dem Stutzen (1) fest verbundenen Verschlussring (10) ausgebildet ist, und am Verschlussring (10) zumindest eine Ausnehmung (19) ausgearbeitet ist, die zusammen mit der Rastfläche (6) eine Rastfedernut (20) bildet, **dadurch gekennzeichnet, dass** jede Nocke (9) als ringförmige Erhebung am Verschlussring (10) ausgebildet ist.

2. Stutzen (1) nach Anspruch 1, **dadurch gekennzeichnet, dass** der Verschlussring (10) auf die Rastfläche (6) hin offen ausgeführt ist.

3. Stutzen (1) nach Anspruch 1 oder 2, **dadurch gekennzeichnet, dass** der Stutzen (1) einstückig mit zumindest einer Rastschulter oder Rastkante (4) und einer Rastfläche (6) ausgeführt ist, welche die steckerseitig Wand der Rastfedernut (7) bildet.

4. Stutzen (1) nach Anspruch 3, **dadurch gekennzeichnet, dass** der Stutzen (1) einschliesslich der Schräge (5), der Rastschulter oder Rastkante (4) oder der Rastfedernut (7) aus feuerverzinktem Stahlblech, Aluminium oder Edelstahl ausgeführt ist.

5. Stutzen nach Anspruch 1, **dadurch gekennzeichnet, dass** der Verschlussring (10) aus Metall, vorzugsweise aus feuerverzinktem Stahlblech, Aluminium oder Edelstahl, ausgeführt ist.

6. Stutzen nach Anspruch 1, **dadurch gekennzeichnet, dass** der Verschlussring (10) auf den Stutzen (1) aufgepresst oder damit verlötet oder verschweisst wird.

7. Steckverbindung an Rohren und Schläuchen, zur Verbindung eines rohrförmigen Stutzens (1) mit einem rohrförmigen Stecker (13, 18), wobei Stutzen (1) und Stecker (13, 18) jeweils mit ihren Enden (2) mit einem Rohr und/oder einem Schlauch verbindbar und mit ihren anderen Enden (3) abdichtend ineinander steckbar und axial sichernd miteinander verrastbar sind, **gekennzeichnet durch** einen Stutzen (1) gemäss einem der Ansprüche 1 bis 6.

## Claims

1. A tubular connecting piece (1) for a plug connection on pipes and hoses, for connection to a tubular plug (13, 18), wherein the connecting piece (1) can be connected with one end (2) to a pipe and/or a hose and/or a housing and with the other end (3) can be mutually plugged and latched in an axially securing manner into the tubular plug (13, 18), wherein the connecting piece (1) has at least one latching shoulder or latching edge (4) which runs at least partially around the outer circumference and is formed from a slope (5) which rises from the outer circumference on the plug side and a latching surface (6) which adjoins behind the outer circumference on the plug side, wherein the connecting piece (1), including the at least one latching shoulder or latching edge (4), is configured in one piece as a deep-drawn part made of metal, wherein axially adjacent to and/or overlapping with a latching shoulder or latching edge (4) or latching spring groove (7) there is an anti-rotation device in the form of at least one cam (9) projecting radially beyond the latching shoulder or latching edge (4) or latching spring groove (7), wherein the cam (9) is formed on a separately manufactured locking ring (10) which is firmly connected to the connecting piece (1), and at least one recess (19) is formed on the locking ring (10) which, together with the latching surface (6), forms a latching spring groove (20), **characterized in that** each cam (9) is formed as an annular elevation on the locking ring (10).

2. The connecting piece (1) according to claim 1, **characterized in that** the locking ring (10) is configured to be open towards the latching surface (6).

3. The connecting piece (1) according to claim 1 or 2, **characterized in that** the connecting piece (1) is configured in one piece with at least one latching shoulder or latching edge (4) and a latching surface (6), which forms the wall of the latching spring groove (7) on the plug side.

4. The connecting piece (1) according to claim 3, **characterized in that** the connecting piece (1), including the slope (5), the latching shoulder or latching edge (4) or the latching spring groove (7), is made of hot-dip galvanized sheet steel, aluminum or stainless steel.

5. The connecting piece according to claim 1, **characterized in that** the locking ring (10) is made of metal, preferably hot-dip galvanized sheet steel, aluminum or stainless steel.

6. The connecting piece according to claim 1, **characterized in that** the locking ring (10) is pressed onto the connecting piece (1) or soldered or welded to it.

7. A plug connection on pipes and hoses, for connecting a tubular connecting piece (1) to a tubular plug (13, 18), wherein the connecting piece (1) and the plug (13, 18) can each be connected by their ends (2) to a pipe and/or a hose and can be mutually plugged in a sealing manner and be mutually latched in an axially securing manner by their other ends (3), **characterized by** a connecting piece (1) according to one of claims 1 to 6.

## Revendications

1. Raccord tubulaire (1) pour une connexion enfichable sur des tubes et des tuyaux en vue d'une connexion à une fiche tubulaire (13, 18), dans lequel une extrémité (2) du raccord (1) peut être connectée à un tube et/ou à un tuyau et/ou à un boîtier et l'autre extrémité (3) peut être enfichée de manière étanche dans la fiche tubulaire (13, 18) et être verrouillée par encliquetage de manière axialement sécurisée, dans lequel le raccord (1) présente au moins un épaulement d'encliquetage ou une arête d'encliquetage (4) faisant au moins partiellement le tour de la périphérie extérieure et constitué(e) d'une pente (5) ascendante à partir de la périphérie extérieure côté fiche et d'une surface d'encliquetage (6) se raccordant à l'arrière par rapport à la périphérie extérieure côté fiche, dans lequel le raccord (1), y compris le au moins un épaulement d'encliquetage ou la au moins une arête d'encliquetage (4), est conçu pour être d'une seule pièce sous forme de pièce emboutie en métal, dans lequel un dispositif anti-rotation sous la forme d'au moins une came (9) dépassant radialement de l'épaulement d'encliquetage ou de l'arête d'encliquetage (4) ou d'une rainure élastique d'encliquetage (7) est fourni de manière à être axialement adjacent à, et/ou à chevaucher, un épaulement d'encliquetage ou une arête d'encliquetage (4) ou une rainure élastique d'encliquetage (7), dans lequel la came (9) est formée au niveau d'une bague de fermeture (10) fabriquée séparément et reliée de manière fixe au raccord (1), et au moins un évidement (19) est ménagé au niveau de la bague de fermeture (10) et forme avec la surface d'encliquetage (6) une rainure élastique d'encliquetage (20), **caractérisé en ce que** chaque came (9) est réalisée sous la forme d'une saillie annulaire au niveau de la bague de fermeture (10).

2. Raccord (1) selon la revendication 1, **caractérisé en ce que** la bague de fermeture (10) est réalisée ouverte en direction de la surface d'encliquetage (6).

3. Raccord (1) selon la revendication 1 ou 2, **caractérisé en ce que** le raccord (1) est réalisé d'une seule pièce avec au moins un épaulement d'encliquetage, ou au moins une arête d'encliquetage (4), et une surface d'encliquetage (6) qui forme la paroi côté fiche de la rainure élastique d'encliquetage (7).

4. Raccord (1) selon la revendication 3, **caractérisé en ce que** le raccord (1), y compris la pente (5), l'épaulement d'encliquetage ou l'arête d'encliquetage (4), ou la rainure élastique d'encliquetage (7), est réalisé en tôle d'acier galvanisée à chaud, en aluminium ou en acier inoxydable.

5. Raccord selon la revendication 1, **caractérisé en ce que** la bague de fermeture (10) est réalisée en métal, de manière préférée en tôle d'acier galvanisée à chaud, en aluminium ou en acier inoxydable.

6. Raccord selon la revendication 1, **caractérisé en ce que** la bague de fermeture (10) est pressée sur le raccord (1) ou est brasée ou soudée avec celui-ci.

7. Connexion enfichable sur des tubes et des tuyaux, en vue d'une connexion d'un raccord tubulaire (1) à une fiche tubulaire (13, 18), dans laquelle les extrémités (2) du raccord (1) et de la fiche (13, 18) peuvent respectivement être connectées à un tube et/ou à un tuyau et leurs autres extrémités (3) peuvent être enfichées l'une dans l'autre de manière étanche et peuvent être verrouillées par encliquetage de manière axialement sécurisée, **caractérisée par** un raccord (1) selon l'une quelconque des revendications 1 à 6.
